# EUROPEAN PATENT APPLICATION

(11) **EP 4 485 284 A1**
(43) Date of publication of application: **01.01.2025**
(21) Application number: 23206652.2
(22) Date of filing: 30.10.2023
(51) Int. Cl.: G06N 3/082

(54) **METHOD AND SYSTEM OF COMPRESSING NEURAL NETWORK MODELS BASED ON MULTI CRITERIA-BASED FILTER REDUNDANCY DETECTION**

(30) Priority: 28.06.2023 IN 202341043447
(71) Applicant: L & T Technology Services Limited, Chennai 600 089 (IN)
(72) Inventor: Gunasekaran, Suresh, 632301 Arani (IN); Subramani, Vikram, 635120 Bargur (IN); Bhadauria, Sudhir, 382418 Ahmedabad (IN); Rajan, Santhiya, 641045 Coimbatore (IN)
(74) Representative: Studio Torta S.p.A.

(57) **Abstract**

A method and system of compressing a neural network model (NNM) is disclosed. The method includes determining a set of criteria based redundant filters from a set of filters, in a corresponding layer, based on each of the plurality of predefined redundancy detection criteria. A set of redundant filters is identified from the set of criteria based redundant filters based on a first intersection score among the set of criteria based redundant filters. Further, the set of redundant filters is identified from the set of criteria based redundant filters based on a normalized minimum or a normalized maximum. The NNM is compressed based on the set of redundant filters for each of the layer.

## Description

The following specification describes the invention and the manner in which it is to be performed

### Technical Field

This disclosure relates generally to neural networks, and more particularly to a method and a system of compressing neural network models based on multi criteria-based filter redundancy detection.

### BACKGROUND

The main challenge with using current state of the art Artificial Intelligence (AI) for real time applications is that the deployment devices are resource constrained. The deployment devices may be smartphones, single board computers, micro controllers, drones, wearables, smartphones, etc. having constraints with respect to memory and processing power. Since, most portable deployment devices may be designed to be light weight and may thus have less storage capacity, less processing capacity. Also, most portable devices are powered by batteries and cannot afford high computational tasks which may cause excessive battery usage and may lead to rapid discharging of the battery. Accordingly, in order to deploy Deep Neural Network (DNN) models in such portable deployment devices, there is a requirement for the DNN models to have less computational cost and must be light weight without losing accuracy.

Therefore, in order for DNN models to be efficiently deployed on deployment devices such that they have less computation cost while running on the deployment device, there is a requirement for an efficient methodology to compress these DNNs without affecting its accuracy.

### SUMMARY OF THE INVENTION

In an embodiment, a method of compressing a neural network model (NNM) is disclosed. The method may include, receiving, by a computing device, a predefined number of filters to be removed in each of a plurality of layers of the NNM. The computing device may further receive a plurality of predefined redundancy detection criteria for each of the plurality of layers of the NNM. In an embodiment, each of the plurality of predefined redundancy detection criteria corresponds to at least one type of feature extracted by the NNM. The computing device may further determine a set of criteria based redundant filters for each of the plurality of layers of the NNM from a set of filters, in a corresponding layer, based on each of the plurality of predefined redundancy detection criteria. The computing device may further identify a set of redundant filters for each of the plurality of layers of the NNM from the set of criteria based redundant filters based on a first intersection score among the set of criteria based redundant filters for the plurality of predefined redundancy detection criteria. In an embodiment, the first intersection score may be proportional to a frequency of occurrence of a criteria based redundant filter for the plurality of predefined redundancy detection criteria. Further, the set of redundant filters may be identified based on a normalized minimum or a maximum value determined based on the at least one type of feature extracted by the NNM for each of the plurality of predefined redundancy detection criteria. In an embodiment a number of the set of redundant filters may be equal to the predefined number of filters to be removed. Further, the computing device may compress the NNM based on the redundant set of filters for each of the layers.

In another embodiment, a system of compressing a neural network model (NNM) is disclosed. The system may include a processor, a memory communicably coupled to the processor, wherein the memory may store processor-executable instructions, which when executed by the processor may cause the processor to receive a predefined number of filters to be removed in each of a plurality of layers in the NNM. The computing device may further receive a plurality of predefined redundancy detection criteria for each of the plurality of layers of the NNM. In an embodiment, each of the plurality of predefined redundancy detection criteria corresponds to at least one type of feature extracted by the NNM. The computing device may further determine a set of criteria based redundant filters for each of the plurality of layers of the NNM from a set of filters, in a corresponding layer, based on each of the plurality of predefined redundancy detection criteria. The computing device may further identify a set of redundant filters for each of the plurality of layers of the NNM from the set of criteria based redundant filters based on a first intersection score among the set of criteria based redundant filters for the plurality of predefined redundancy detection criteria. In an embodiment, the first intersection score may be proportional to a frequency of occurrence of a criteria based redundant filter for the plurality of predefined redundancy detection criteria. The computing device may further identify a set of redundant filters for each of the plurality of layers of the NNM from the set of criteria based redundant filters based on a normalized minimum or a normalized maximum value determined based on the at least one type of feature extracted by the NNM for each of the plurality of predefined redundancy detection criteria. In an embodiment a number of the set of redundant filters may be equal to the predefined number of filters to be removed. Further, the computing device may compress the NNM based on the redundant set of filters for each of the layers.

Various objects, features, aspects, and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a block diagram of an exemplary neural network model (NNM) compression system, in accordance with some embodiments of the present disclosure.
**FIG. 2** is a functional block diagram of the compression device, in accordance with some embodiments of the present disclosure.
**FIG. 3** illustrates an exemplary VGG 13 network, in accordance with some embodiment of the present disclosure.
**FIG. 4** illustrates a table depicting exemplary properties of the plurality of layers of the exemplary VGG 13 architecture, in accordance with some embodiment of the present disclosure.
**FIG. 5** is an exemplary operational flowchart of compressing the NNM, in accordance with some embodiment of the present disclosure.
**FIG. 6** illustrates a table depicting determination of norm of the plurality of filters of one layer of VGG 13 architecture, in accordance with some embodiment of the present disclosure.
**FIG. 7** illustrates a table depicting norm-based filter selection from the set of filters of one layer of VGG 13 architecture, in accordance with some embodiment of the present disclosure.
**FIG. 8** illustrates a table depicting norm-based distance sub-criteria evaluation for the norm based distance criteria, in accordance with some embodiments of the present disclosure.
**FIG. 9** illustrates a table depicting distance based sub-criteria evaluation, in accordance with some embodiments of the present disclosure.
**FIG. 10** illustrates a table depicting correlation based sub-criteria evaluation, in accordance with some embodiments of the present disclosure.
**FIG. 11** illustrates a table depicting mutual information based sub-criteria evaluation, in accordance with some embodiments of the present disclosure.
**FIG. 12** illustrates two tables providing exemplary norm based distance criteria intersection score and min/max score based on the set of sub-criteria based selected filters of one layer of VGG13 architecture, in accordance with some embodiments of the present disclosure.
**FIG. 13** illustrates two tables with exemplary distance based criteria intersection score and min/max score based on the set of sub-criteria based selected filters of one layer of VGG13 architecture, in accordance with some embodiments of the present disclosure.
**FIG. 14** illustrates a table with exemplary correlation based criteria intersection score and min/max score based on the set of sub-criteria based selected filters of one layer of VGG13 architecture, in accordance with some embodiments of the present disclosure.
**FIG. 15** illustrates a table with exemplary mutual information based min/max score of one layer of VGG13 architecture, in accordance with some embodiment of the present disclosure.
**FIG. 16** illustrates a table depicting exemplary determination of set of redundant filters from each of the sets of criteria based redundant filters, in accordance with some embodiment of the present disclosure.
**FIG. 17** is a flowchart of a method of compressing neural network models, in accordance with some embodiments of the present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

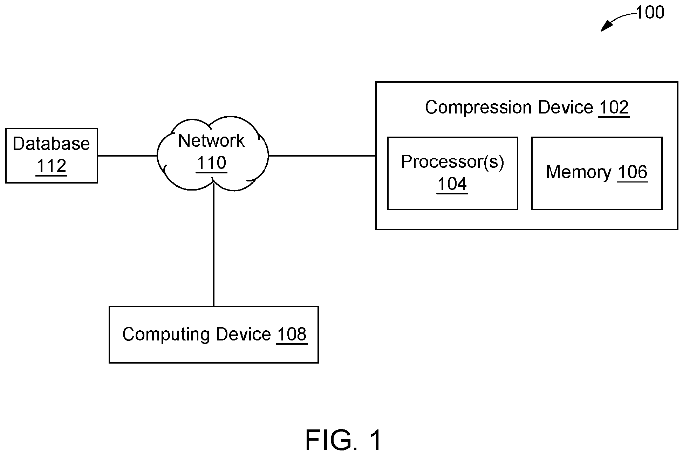

Referring now to **FIG. 1****,** a block diagram of an exemplary neural network model (NNM) compression system 100, in accordance with some embodiments of the present disclosure. The NNM compression system 100 may include a compression device 102, a computing device 108, a database 112 communicably coupled to each other through a wired or a wireless communication network 110. The compression device 102 may include a processor 104 and a memory 106. In an embodiment, examples of processor(s) 104 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™} system on a chip processors or other future processors. The memory 106 may store instructions that, when executed by the processor 104, cause the processor 104 to compress a neural networks model (NNM). The memory 106 may be a non-volatile memory or a volatile memory. Examples of non-volatile memory may include but are not limited to a flash memory, a Read Only Memory (ROM), a Programmable ROM (PROM), Erasable PROM (EPROM), and Electrically EPROM (EEPROM) memory. Examples of volatile memory may include but are not limited to Dynamic Random Access Memory (DRAM), and Static Random-Access memory (SRAM).

In an embodiment, the database 112 may be enabled in a cloud or physical database storing data input by the computing device 108 or generated by the compression device 102.

In an embodiment, the communication network 110 may be a wired or a wireless network or a combination thereof. The network 110 can be implemented as one of the different types of networks, such as but not limited to, ethernet IP network, intranet, local area network (LAN), wide area network (WAN), the internet, Wi-Fi, LTE network, CDMA network, 5G and the like. Further, network 110 can either be a dedicated network or a shared network. The shared network represents an association of the different types of networks that may use a variety of protocols, for example, Hypertext Transfer Protocol (HTTP), Transmission Control Protocol/Internet Protocol (TCP/IP), Wireless Application Protocol (WAP), and the like, to communicate with one another. Further network 110 can include a variety of network devices, including routers, bridges, servers, computing devices, storage devices, and the like.

In an embodiment, the compression device 102 and the computing device 108 may be same or may be integrated to each other. In an embodiment, the computing device 108 may be a computing system, including but not limited to, a smart phone, a laptop computer, a desktop computer, a notebook, a workstation, a portable computer, a personal digital assistant, a handheld, or a mobile device. In an embodiment, the compression device 102 may be implemented on the computing device 108 and the processor 104 may perform one or more steps for compression of the NNM as described in detail below.

In an embodiment, the neural network model may include interconnection of numerous neurons to form an NNM architecture. In an embodiment, neurons may also be interchangeably referred to as filters. In an embodiment, different techniques for model compression may be used such as, but not limited to, pruning, quantization, factorization and knowledge distillation, and so on. In an embodiment, pruning may be the process of removing less important or redundant neurons in an NNM that may not contribute much to the accuracy of the network. However, pruning may reduce the computational complexity of the network and may make the NNM less device resource intensive. Further, different types of pruning may be performed such as structured and unstructured, depending on shape of neurons to be pruned. Further, depending on the time at which pruning is performed static or dynamic pruning may be performed. Further, based on a pruning ratio, local or global pruning may be performed.

In an embodiment, the NNMs may be pruned using global pruning methodology or local pruning methodology. In an embodiment, local pruning methodology is a type of pruning technique wherein a predefined number of neurons/connections of the NNM may be removed from all layers in the networks. For example, in case a local pruning ratio is predefined to be 20%, then local pruning may remove 20% of neurons in each of the layers in the model.

In another embodiment, the global pruning methodology is a type of pruning technique in which all parameters across all layers may be combined and a predefined fraction of the neurons/connections are selected randomly for pruning. For example, in case a global pruning ratio is predefined to be 20%, then global pruning may remove 20% of neurons in all of the layers in the network.

Further, in the case of pruning based on global pruning ratio, selection of number of filters to be removed from each layer is very critical to the accuracy of the NNM. In an exemplary embodiment, in case one filter is removed from one of the depth layers of a VGG16 model, may cause reduction of 9216 parameters and 14.5 million FLOPs. However, in another scenario, in case filters are removed from one of the middle layers of the VGG16 model, there may be reduction of same number of parameters i.e., 9216 but reduction of 57.8 million FLOPs. Accordingly, the reduction of computational cost varies greatly based on selection of filters from the types of layers.

In an embodiment, pruning may be defined as the removal of less important filters in a neural network. These less important filters may be determined based on two methodologies. The first methodology of determining filter for pruning may be detection filters that may be redundant/repetitive and may have the same features. The second methodology of determining filter for pruning may be detection of filters that may be less potential and removing them may not decrease the accuracy of the NNM. Accordingly, the first methodology may be concerned about the distribution of filters in the NNM whereas the second methodology may be concerned with the individual contribution of the filters. In an embodiment, determination of individual magnitude value of the features extracted by the filters for each of the two methodologies.

In a preferred embodiment, both type one and type two methods may be used for pruning, however type one based pruning may have higher significance than type two. In type two pruning the importance of the filters may only be evaluated for their richness in features but their correlation between various layers or for duplication may not be considered. However, deep learning models may have a number of parameters and may severely suffer from high redundancy/correlation. Therefore, there may be a need for redundancy removal in deep neural networks by determination of redundant filters in each layer for efficient compression of the NNM. In an embodiment, the removal of redundant filters may be important in the NNM since the quality of the features extracted decreases very drastically and further it may not be able to extract any unique features when it is trying to learn. Also, there may be an increase in overfitting of the NNM.

By way of an example, the compression device 102may receive a predefined number of filters to be removed in each of a plurality of layers of the NNM as an input from the computing device 108. The compression device 102may further receive a plurality of predefined redundancy detection criteria for each of the plurality of layers of the NNM as an input from the computing device 108. In an embodiment, each of the plurality of predefined redundancy detection criteria corresponds to at least one type of feature extracted by the NNM in order to extract or determine one or more type of features from data being processed by the NNM. In an embodiment, the plurality of predefined redundancy detection criteria may be predefined based on the type of NNM. Further, the features may be extracted using one or more features mapping techniques such as, but not limited to, feature extraction, feature transformation, feature selection, feature scaling, feature mapping, feature engineering, dimensionality reduction, embeddings, data augmentation, domain knowledge, etc.

In an embodiment, the NNM may include a plurality of layers and each of the plurality of layers may include a set of filters. In an embodiment, in order to compress the NNM based on a predefined local pruning ratio, a predefined number of filters may be removed from each layer of the NNM. In an embodiment, local pruning ratio for each layer of the NNM may be determined based on a methodology described in co-filed patent application titled "METHOD AND SYSTEM OF COMPRESSING NEURAL NETWORK MODELS BASED ON NETWORK ARCHITECTURE DESIGN" incorporated herein in its entirety by reference. In an embodiment, in order to remove a predefined number of filters in each layer based on local pruning ratio, selection of filters in each layer is crucial in order to remove only redundant filters such that the accuracy of the NNM is not compromised.

Accordingly, the compression device 102 may determine a set of criteria based redundant filters from the set of filters, in a corresponding layer, based on each of the plurality of predefined redundancy detection criteria. In an embodiment, each of the plurality of predefined redundancy detection criteria may correspond to at least one type of feature extracted by the NNM. In an embodiment, each layer of the NNM may be configured to process input data in order to extract one or more features and generate an output. The output of a preceding layer may be transmitted as input to succeeding layers as input. In order for the NNM to be efficient, the features extracted by each layer may be based on features extracted by the set of filters in a corresponding layer. In an embodiment, a filter may be determined as redundant or less potential in case the filter is repetitive and has same expressibility of features as other filters in the corresponding layer. In an exemplary example, a correlation coefficient may determine the correlation between two features and hence how related they are. If two features contribute the same information then one among them is considered potentially redundant, this is because the classification would finally give the same result whether or not both of them are included or any one of them is included. Accordingly, filters corresponding to such redundant features may be determined based on the each of the plurality of redundancy detection criteria in each of the layers. In an embodiment, each of the plurality of predefined redundancy detection criteria may include one or more sub-criteria. In an embodiment, each of the one or more sub-criteria of the corresponding predefined redundancy detection criteria corresponds to one or more sub-features extracted based on the at least one type of processing performed by the NNM in a different dimension or perspective as the corresponding feature. In an embodiment, determination of the set of criteria based redundant filters may include determination of a set of sub-criteria based redundant filters from the set of filters based on each of the one or more sub-criteria of each of the corresponding plurality of predefined redundancy detection criteria by the compression device 102. Accordingly, the compression device 102 may identify a set of criteria based redundant filters from the set of sub-criteria based redundant filters. In order to do so, the compression device 102 may first determine a set of sub-criteria based redundant filters from the set of filters based on each of the one or more sub-criteria. In an embodiment, the set of sub-criteria based redundant filters may be determined based on determination of a second intersection score among the set of sub-criteria based redundant filters for each of the one or more sub-criteria. In an embodiment, the second intersection score may be proportional to a frequency of occurrence of a sub-criteria based redundant filter for the one or more sub-criteria. Further, the set of sub-criteria based redundant filters may be determined based on determination of a minimum or a maximum value determined based on the one or more sub-features extracted based on the sub-processing performed by the NNM for the each of the one or more sub-criteria. In an embodiment, the minimum or the maximum value may be determined based on a sum of an output of each of the one or more sub-features extracted by the NNM for the each of the one or more sub-criteria. In an embodiment, the one or more sub-features extracted based on the at least one type of processing performed by the NNM relates to a different dimension or perspective of the corresponding feature.

Accordingly, the compression device 102 may identify the set of criteria based redundant filters from the set of sub-criteria based redundant filters. Further, the compression device 102 may identify the set of redundant filters for each of the plurality of layers of the NNM from the set of criteria based redundant filters. In an embodiment, the set of redundant filters from the set of criteria based redundant filters may be determined based on a first intersection score among the set of criteria based redundant filters for the plurality of predefined redundancy detection criteria. In an embodiment, the first intersection score may be proportional to a frequency of occurrence of a criteria based redundant filter for the plurality of predefined redundancy detection criteria. In an embodiment, the compression device 102 may identify the set of redundant filters for each of the plurality of layers of the NNM from the set of criteria based redundant filters based on a normalized minimum or a normalized minimum or a normalized maximum value determined based on the least one type of feature extracted based on a processing performed by the NNM for each of the plurality of predefined redundancy detection criteria. In an embodiment, the normalized minimum or the normalized maximum value may be determined based on a sum of an output of the at least one type of feature extracted by the NNM for each of the plurality of predefined redundancy detection criteria.

Accordingly, the compression device 102 may compress the NNM based on the redundant set of filters determined for each of the layers. The compression of the NNM based on the redundant set of filters for each of the layer may include removing of the set of redundant filters from the set of filters. Further, the compression device 102 may fine tune the NNM based on one or more fine tuning techniques such as, but not limited to, knowledge distillation-based techniques, etc.

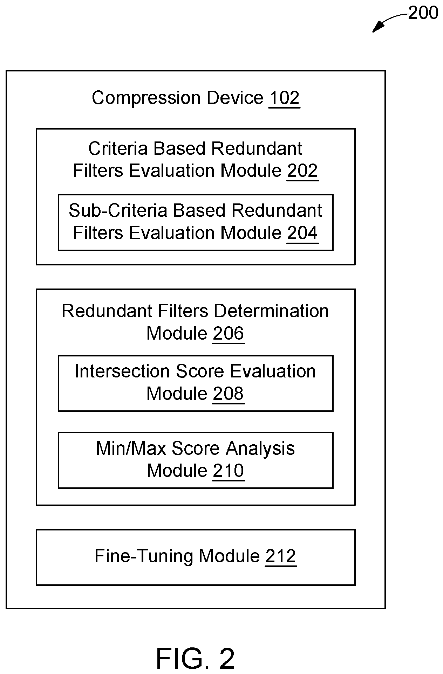

Referring now to **FIG. 2****,** a functional block diagram of the compression device 102, in accordance with some embodiments of the present disclosure. The compression device 102 may include a criteria based redundant filter evaluation module 202 and a redundant filters determination module 206.

The criteria based redundant filters evaluation module 202 may sub-include a sub-criteria based redundant filters evaluation module 204. The compression device 102 may receive as input or may determine the predefined number of filters to be removed in each of the plurality of layers of the NNM. In an embodiment, the predefined number of filters to be removed in each of the plurality of layers of the NNM may be determined based on a predefined local pruning ratio. The compression device 102 may further receive the plurality of predefined redundancy detection criteria based on the type of NNM. In an exemplary embodiment, the NNM may be selected based on a user requirement. In an embodiment, NNM may be, but not limited to, ResNet, AlexNet, VGG network, MobileNet, Fast R-CNN, Mask R-CNN, YOLO, SSD, etc. In an embodiment, each of the plurality of predefined redundancy detection criteria may correspond to at least one type of feature extracted by the NNM.

The criteria based redundant filters evaluation module 202 may determine the set of criteria based redundant filters from the set of filters in a corresponding layer based on each of the plurality of predefined redundancy detection criteria. The each of the plurality of predefined redundancy detection criteria comprises one or more sub-criteria. In an embodiment, the criteria based redundant filters evaluation module 202 may include the sub-criteria based redundant filters evaluation module 204 which may determine a set of sub-criteria based redundant filters from the set of filters based on each of the one or more sub-criteria. In an embodiment, the each of the one or more sub-criteria of the corresponding predefined redundancy detection criteria corresponds to one or more sub-features extracted by the NNM.

The redundant filters determination module 206 may sub-include an intersection score evaluation module 208, a min/max score analysis module 210 and a fine-tuning module 212.

In an embodiment, the intersection score evaluation module 208 may determine a first intersection score. In an embodiment, the first intersection score may be determined as proportional to frequency of occurrence of a criteria based redundant filter for the plurality of predefined redundancy detection criteria.

In an embodiment, the intersection score evaluation module 208 may determine a second intersection score. The second intersection score may be determined as proportional to frequency of occurrence of a sub-criteria based redundant filter for the one or more sub-criteria based on the one or more sub-features extracted based on the sub-processing performed by the NNM for the each of the one or more sub-criteria.

The min/max score analysis module 210 may determine set of sub-criteria based redundant filters based on a minimum or a maximum value of the sub-features extracted corresponding to the one or more sub-features extracted by the NNM for the each of the one or more redundancy detection sub-criteria. The minimum or the maximum value may be determined based on a sum of an output of each of the sub-features extracted based on the one or more sub-processing performed by the NNM for the each of the one or more sub-criteria.

Further, the min/max score analysis module 210 may determine set of criteria based redundant filters based on a normalized minimum or a normalized maximum value of the features extracted corresponding to the plurality of features extracted by the NNM for the each of the plurality of redundancy detection criteria. The minimum or the maximum value may be determined based on a sum of an output of each of the features extracted based on the type of processing performed by the NNM for the each of the plurality of redundancy detection criteria.

Further, the redundant filters determination module 206 may identify the set of redundant filters from the set of criteria based redundant filters based on a first intersection score determined by the intersection score evaluation module 208. Further, the redundant filters determination module 206 may identify the set of redundant filters from the set of criteria based redundant filters based on the normalized minimum or the normalized maximum value of the features extracted corresponding to the plurality of features extracted by the NNM for the each of the plurality of redundancy detection criteria by the min/max score analysis module 210.

Further, the redundant filters determination module 206 may the set of criteria based redundant filters from each of the set of sub-criteria based redundant filters. In an embodiment, the redundant filters determination module 206 may determine the sets of sub-criteria based redundant filters for each of the one or more sub-criteria based on the second intersection score determined by the intersection score evaluation module 208. Further, the redundant filters determination module 206 may determine the sets of sub-criteria based redundant filters for each of the one or more sub-criteria based on the minimum or the maximum value of the sub-features extracted corresponding to the plurality of sub-features extracted by the NNM for the one or more redundancy detection sub-criteria by the min/max score analysis module 210.

The fine-tuning module 212 may compress the NNM based on the redundant set of filters determined for each of the layer. The compression of the NNM may be performed to remove the set of redundant filters from the set of filters. Further, the fine-tuning module 212 may fine tune the NNM based on, but not limited to, knowledge distillation-based techniques.

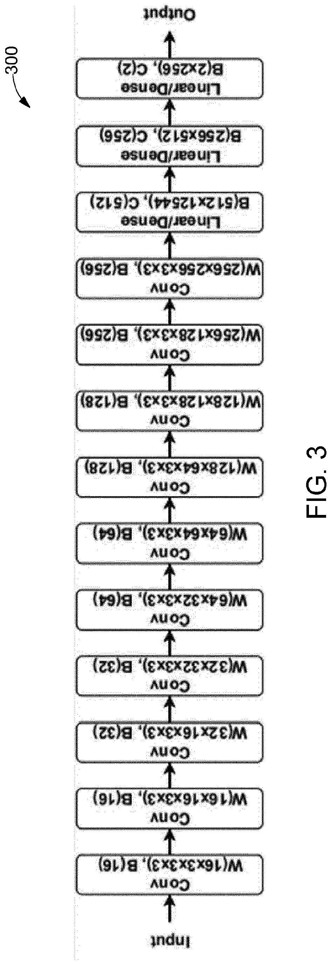

Referring now to **FIG. 3****,** an exemplary VGG 13 network is shown, in accordance with some embodiment of the present disclosure. The VGG 13 network 300 may be a neural network model deployed on the computing device 108 and may be compressed by the compression unit 102.

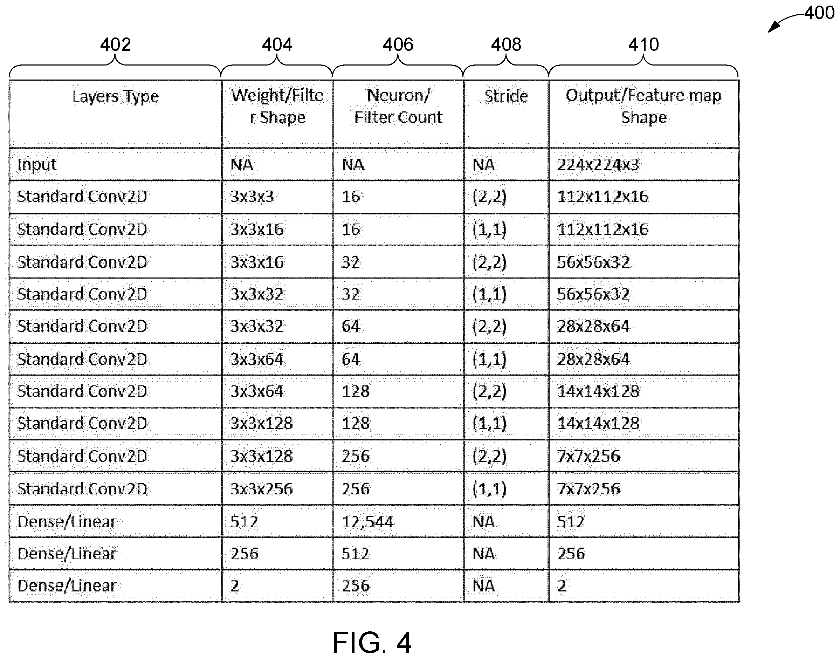

Referring now to **FIG. 4****,** table 400 depicts exemplary properties of a plurality of layers of the exemplary VGG 13 architecture 300, in accordance with some embodiment of the present disclosure. Table 400 depicts lists each of the plurality of layers in the VGG 13 architecture 300 in a sequence in which the layers are enabled and further lists their layer type 402, a weight per filter shape 404, a neuron/filter count 406, a stride 408 and an output/feature map shape 410. The layer type 402 may define the type of each of the plurality of layers of the VGG 13 model 300. The weight or filter shape 404 may define the shape of filters of each of the plurality of layers. The neuron or filter count 406 may define the number of neurons or filter present in each of the plurality of layers. The stride 408 may define the step size at which filters move across the input data or feature maps. The output per feature map shape 410 may define the shape of output per feature map.

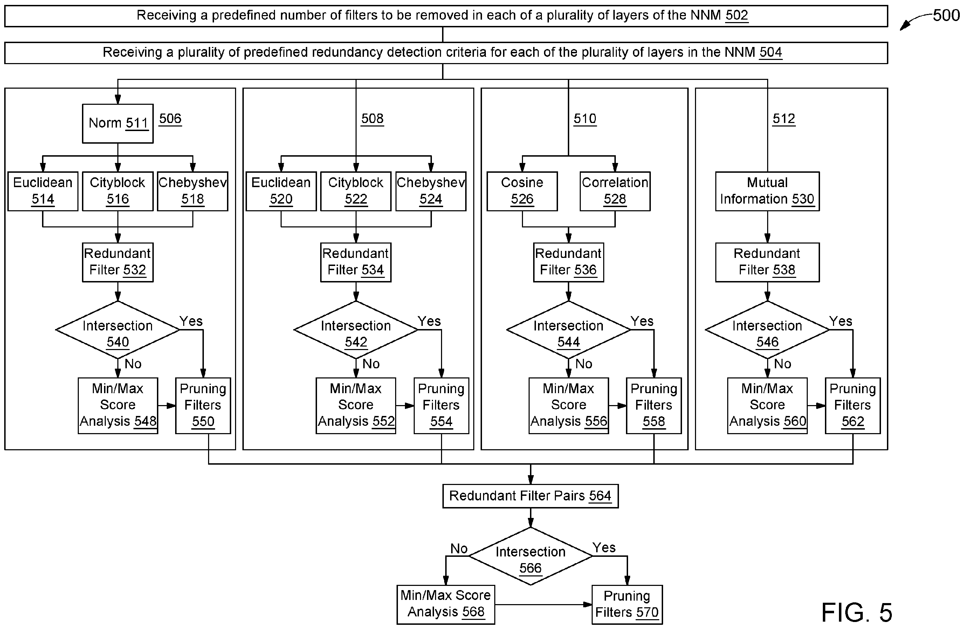

Referring now to **FIG. 5****,** an operational flowchart of compressing the NNM 300 is illustrated, in accordance with some embodiment of the present disclosure. The flowchart 500 may include a plurality of steps that may be performed by the compression system 100 to compress the neural network models based on the plurality of predefined redundancy detection criteria.

At step 502, the compression device 102 may receive a predefined number of filters to be removed in each of the plurality of layers of the NNM being deployed on the computing device 108. At step 504, the compression device 102 may receive a plurality of predefined redundancy detection criteria based on the NNM. In an embodiment, each of the plurality of predefined redundancy detection criteria may correspond to at least one type of feature extracted by the NNM. In an exemplary embodiment, it may be considered that four predefined redundancy detection criteria may be used to determine a set of redundant filters from the set of criteria based redundant filters. In an embodiment, there may be two or more predefined redundancy detection criteria for determining a set of redundant filters from the set of criteria based redundant filters. In an embodiment, examples of the predefined redundancy detection criteria may include, but not limited to, norm based distance criterion, distance based criterion, correlation based criterion, etc. Accordingly, each of the steps 506, 508, 510 and 512 may correspond to a predefined redundancy detection criterion which may be indicative of a type of feature extracted by the NNM. In an embodiment, step 506 may correspond to a norm based distance redundancy detection criterion, step 508 may correspond to distance based redundancy detection criterion, step 510 may correspond to correlation based redundancy detection criterion and step 512 may correspond to mutual information based redundancy detection criterion.

Each of the predefined redundancy detection criteria as depicted by steps 506, 508, 510 and 512 may include one or more sub-criteria. The norm based distance criterion depicted by step 506 may further include determining a first set of criteria based redundant filters based on determination of sub-features extracted at steps 514, 516 and 518 respectively. At step 511, the processor 104 may determine a norm sub- feature for each set of filters 602 of a corresponding layer of the VGG 13 model 300.

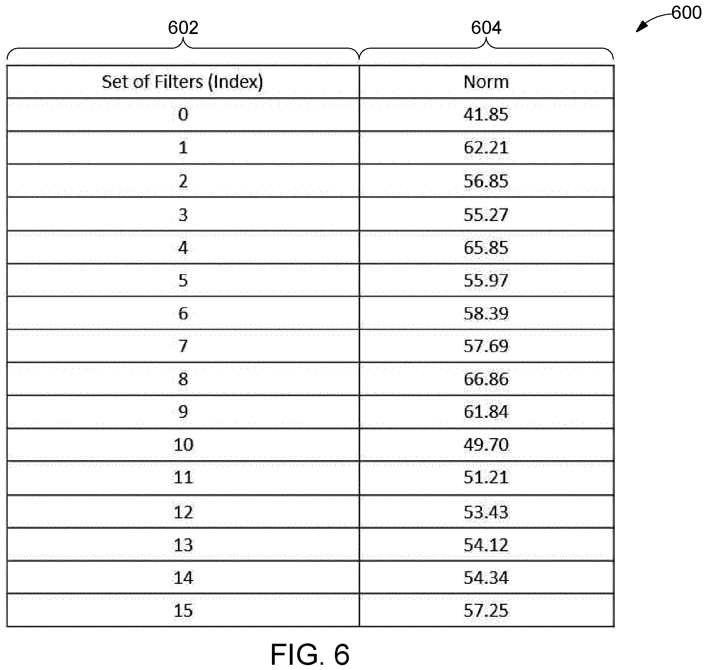

Referring now to **FIG. 6****,** table 600 depicts determination of norm of the plurality of filters of one layer of the VGG 13 architecture 300, in accordance with some embodiment of the present disclosure. Based on the determination of norm value 604, the compression device 102 may select a set of filters for the layer to be evaluated for further redundancy detection sub-criteria at steps 514, 516 and 518 by extracting sub-features of Euclidean distance, city-block distance and Chebyshev distance respectively.

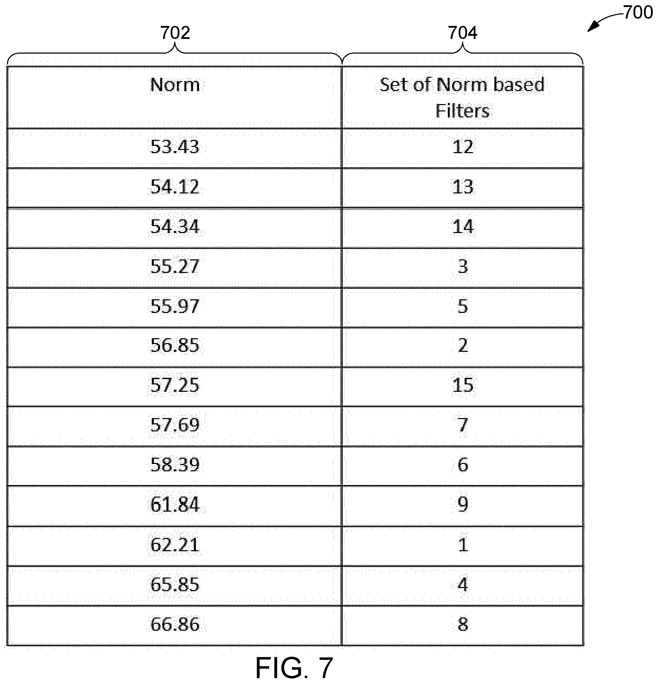

Referring now to **FIG. 7****,** table 700 depicts a set of norm based filters 704 selected based norm value 604 of the set of filters 602 of the one layer of VGG 13 architecture, in accordance with some embodiment of the present disclosure. Table 700 depicts the set of norm based filters 704 that may be selected based on an ascending value of norm value 702 of each of the set of filters 602. The set of norm based filters 704 may include indexed of each of the filters selected in ascending order of their norm value 702. In an embodiment, the set of norm based filters 704 may include a predefined percentage of filters, such as, but not limited to, twenty percent, having low norm value with respect to the set of filters 602 in order to maintain the distribution.

At steps 514, 516 and 518 respectively, the processor 104 may determine the Euclidean distance, city-block distance and Chebyshev distance respectively of the set of norm based filters 704 as sub-features corresponding to the sub-criteria of the norm based distance criterion 506, in order to determine the corresponding first set of sub-criteria based redundant filters from the set of norm based filters 704.

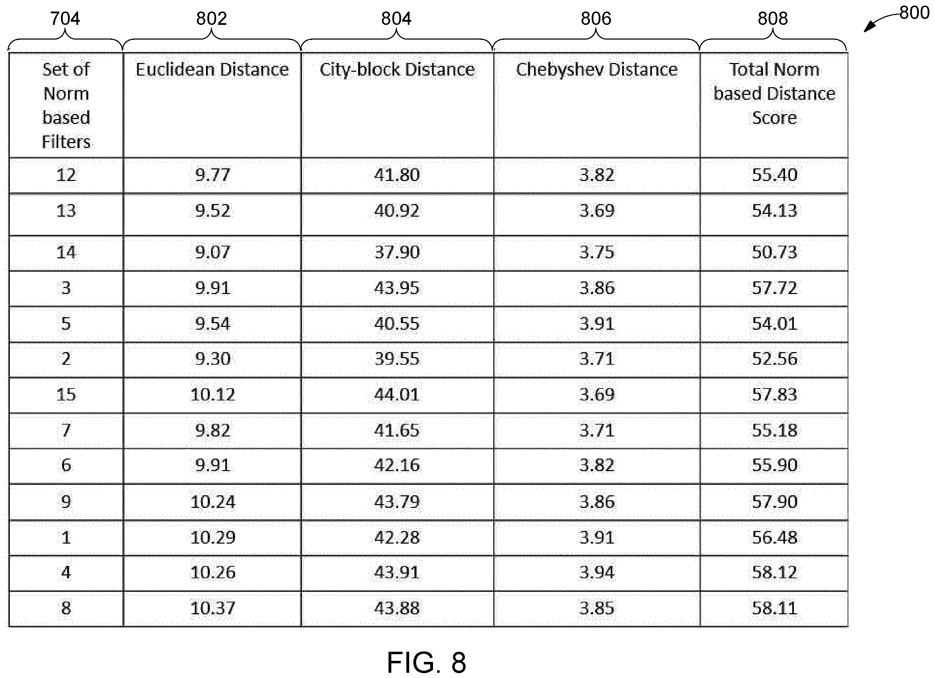

Referring now to **FIG. 8****,** table 800 depicts norm based distance sub-criteria evaluation for the norm based distance criteria, in accordance with some embodiments of the present disclosure. Table 800 depicts determined sub-features of Euclidean distance 802, city-block distance 804, Chebyshev distance 806 and a total norm based distance score 808 of the set of filters 704. The total norm based distance score 808 may be determined as a sum of the Euclidean distance 802, city-block distance 804 and Chebyshev distance 806. The first set of criteria based redundant filters for the norm based distance criteria at step 506 may be determined from the set of filters 704 as described later. The determination of Euclidean distance 802 may include calculation of Euclidean distance of each of the filters in the set of filters 704. The Euclidean distance may be determined between two filters based on comparison of their weights. The Euclidean distance may be determined as the square root of the sum of the squared difference between corresponding weights of the two filters. In an embodiment, the determination of city-block distance 804 may include calculating city-block distance of each of the filters in the set of filters 704. In an embodiment, the city-block distance may be determined between two filters based on comparison of their weights. In an embodiment, city-block distance may be determined as the sum of the absolute difference between corresponding weights of the two filters. Further, the determination of Chebyshev distance 806 may include calculation of the Chebyshev distance of each of the filters in the set of filters 704. The Chebyshev distance may be determined between two filters based on comparison of their weights. In an embodiment, the Chebyshev distance may be determined as the maximum absolute difference between corresponding weights of the two filters.

Referring back to **FIG. 5****,** at step 508, the compression device 102 may determine a second set of criteria based redundant filters based on the distance based redundancy detection criterion. Further, the distance based redundancy detection criterion at step 508 may include determining of three sub-features such as, but not limited to, Euclidean distance, city-block distance and Chebyshev distance at steps 520, 522 and 524 respectively. Accordingly, the compression device 102 may determine sub-features corresponding to distance based redundancy detection criterion at steps 520, 522 and 524 by determining sub-features of Euclidean distance, city-block distance and Chebyshev distance respectively.

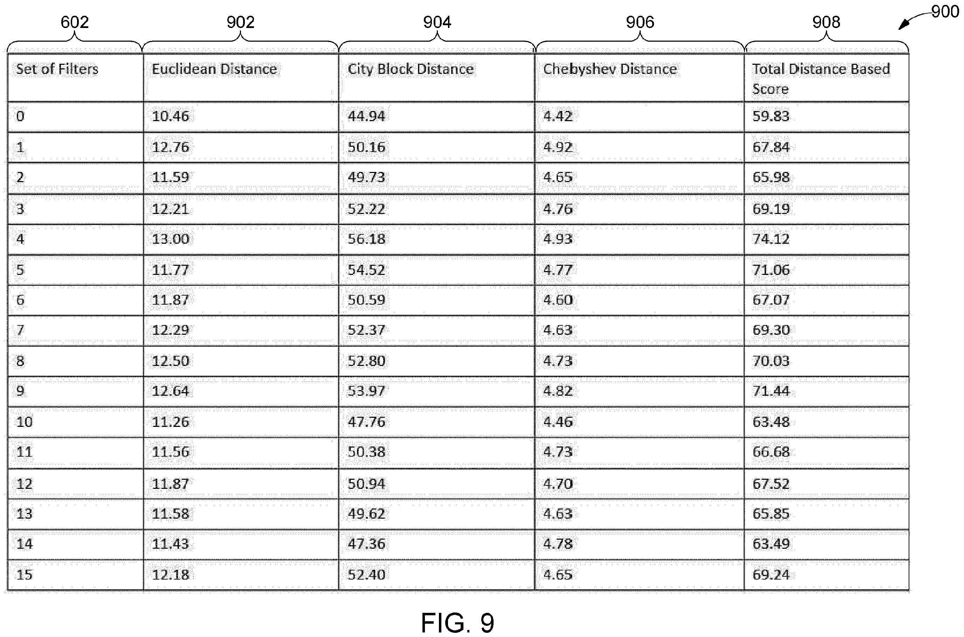

Referring now to **FIG. 9****,** table 900 depicts distance based sub-criteria evaluation, in accordance with some embodiments of the present disclosure. Table 900 depicts determined sub-features of Euclidean distance 902, city-block distance 904, Chebyshev distance 906 and a total distance based score 908 of the set of filters 602. The total norm based distance score 908 may be determined as a sum of the Euclidean distance 902, city-block distance 904 and Chebyshev distance 906. The second set of criteria based redundant filters based on the distance based criteria at step 508 may be determined from the set of filters 602 as described later.

Referring back to **FIG. 5****,** at step 510, the compression device 102 may determine a third set of criteria based redundant filters based on a correlation based redundancy detection criterion. Further, the correlation based redundancy detection criterion at step 510 may include determining of two sub-features such as, but not limited to, cosine distance and correlation distance. Accordingly, the compression device 102 may determine sub-features corresponding to the correlation based redundancy detection criterion at the steps 526 and 528 by determining the cosine distance and the correlation distance respectively.

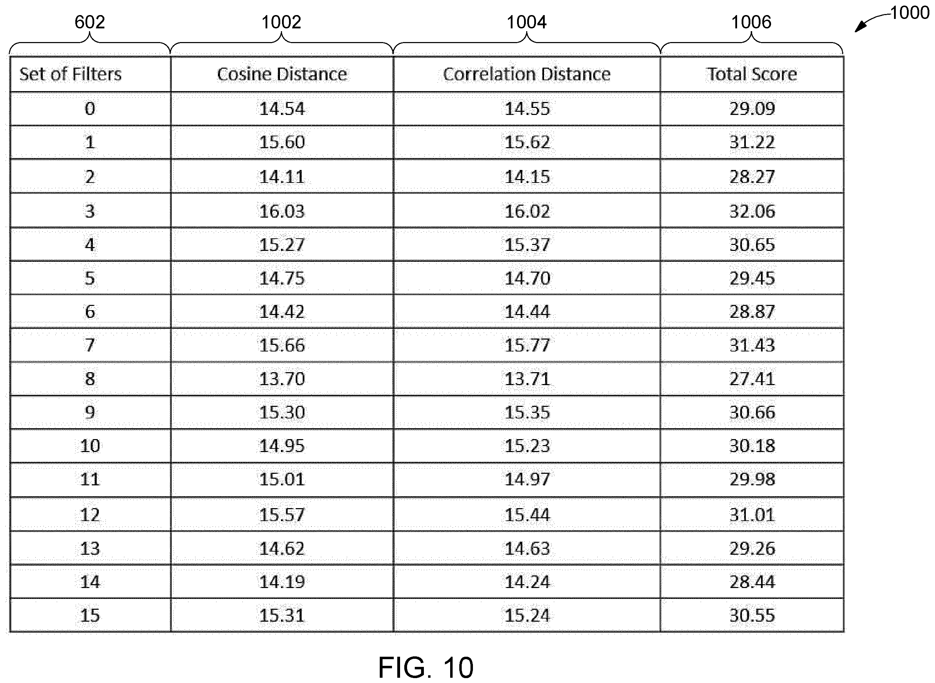

Referring now to **FIG. 10****,** table 1000 depicts correlation based sub-criteria evaluation, in accordance with some embodiments of the present disclosure. Table 900 depicts determined sub-features of cosine distance 1002 and correlation distance 1004 and a total correlation based distance score 1006 of the set of filters 602. The correlation based distance score 1006 may be determined as a sum of the cosine distance 1002 and the correlation distance 1004. The third set of criteria based redundant filters based on the correlation based criteria at step 510 may be determined from the set of filters 602 as described later.

Referring back to **FIG. 5****,** at step 512, the compression device 102 may determine a fourth set of criteria based redundant filters based on a mutual information based redundancy detection criterion. Further, the mutual information based redundancy detection criterion at step 512 may include determining of one sub-feature such as, but not limited to, mutual information. Accordingly, the compression device 102 may determine sub-feature corresponding to the mutual information based redundancy detection criterion at the step 530 by determining the mutual information value.

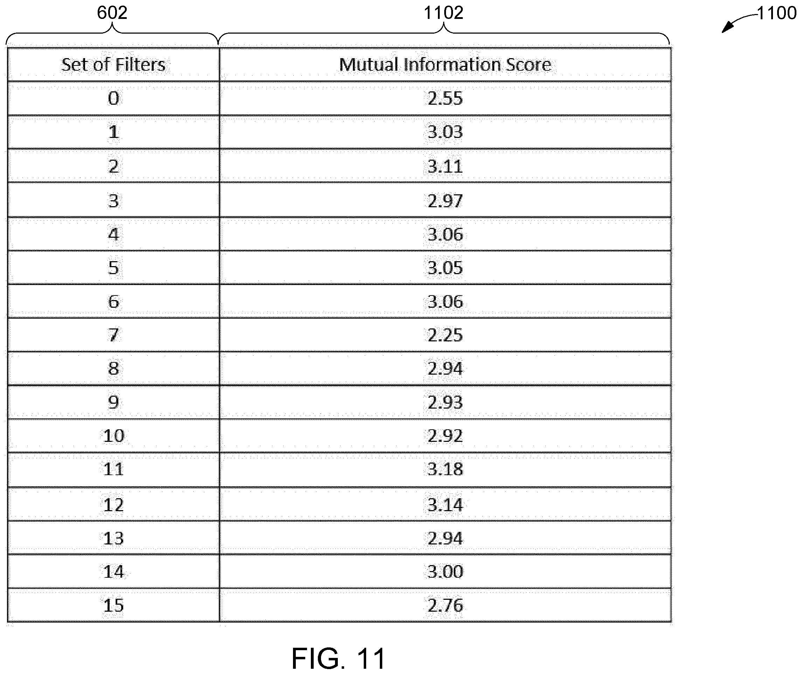

Referring now to **FIG. 11****,** table 1100 depicts mutual information based sub-criteria evaluation, in accordance with some embodiments of the present disclosure. Table 900 depicts determined sub-features of mutual information 1102 of the set of filters 602. The fourth set of criteria based redundant filters based on the mutual information based criteria at step 512 may be determined from the set of filters 602 as described later.

Referring back to **FIG. 5****,** a first set of criteria based redundant filters at step 506 based on determination of three sub-features at steps 514, 516 and 518. Accordingly, the first set of criteria based redundant filters may be determined at step 550 based on each of the three set of sub-criteria based redundant filters determined at step 532 based on determination of a second intersection score by the intersection score evaluation module 208 and/or based on the determination of a minimum or a maximum value of the sum of the three sub-features extracted by the NNM at steps 514, 516 and 518 by the min/max score analysis module 210 for the each of the one or more sub-criteria.

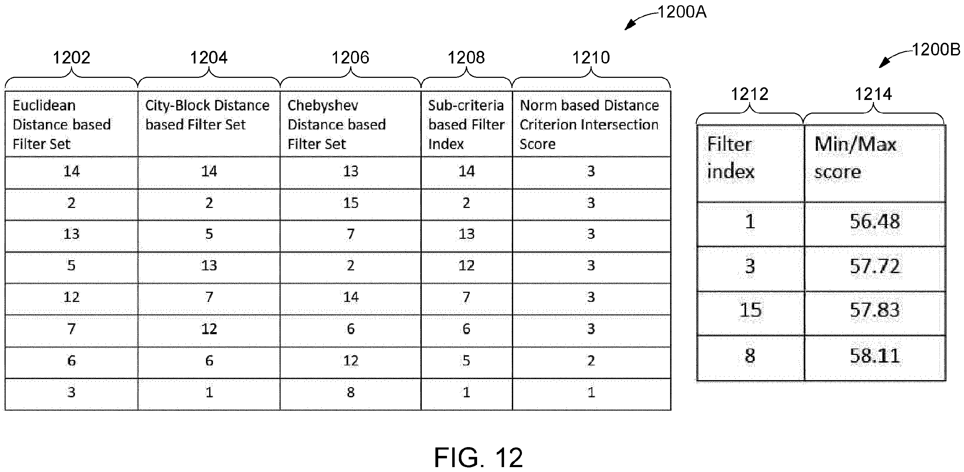

Referring now to **FIG. 12****,** two tables 1200A and 1200B provide exemplary norm based distance criteria intersection score and min/max score based on the set of sub-criteria based selected filters of one layer of VGG13 architecture, in accordance with some embodiments of the present disclosure.

In an exemplary embodiment, the predefined number of filters to be removed may be defined as eight. Accordingly, eight redundant filters are to be identified in each layer based on the plurality of redundancy detection criteria. Table 1200A depicts a Euclidean distance based filter set 1202, a city-block distance based filter set 1204 and a Chebyshev distance based filter set 1206. The Euclidean distance based filter set 1202 may be determined by determining filters equal to the predefined number of filters i.e., eight filters from the set of filters 704 sorted in an ascending value of the Euclidean distance sub-feature. In an embodiment, the sub-criteria based redundant filter set may be determined based on sorting of the filters based on ascending or descending value of the corresponding sub-features extracted.

Table 1200A provides the second intersection score as a norm based distance criterion intersection score 1210. In an embodiment, the norm based distance criterion intersection score 1210 at step 540 identifies a frequency of occurrence of each of the final filters 1208 in the Euclidean distance based filter set 1202, the city-block distance based filter set 1204 and the Chebyshev distance based filter set 1206. Accordingly, it may be noted that filters indexed as "14", "2", "13", "12", "7" and "6" have been selected in all the three sub-criteria based redundant filter sets 1202, 1204 and 1206. Also, filter indexed as "5" has been selected in only two of the three sub-criteria based redundant filter sets 1202, 1204 and 1206. Similarly, filter indexed "1" has been selected in only one of the three sub-criteria based redundant filter sets 1202, 1204 and 1206. Accordingly, filters indexed "14", "2", "13", "12", "7", "6" and "5" may be selected based on their higher second intersection score 1210. Further, since eight redundant filters are to be determined from the set of the filters 704.

Accordingly, at step 548, the processor 104 may determine a minimum or a maximum value of the total norm based distance score 808 for each of the set of filters 704 in order to determine one redundant filter in order to determine eight redundant filters for the first set of criteria based redundant filters. Table 1200B depicts list of filters 1212 having second intersection score 1210 of less than or equal to one and their corresponding min/max score 1214 as per the total norm based distance score 808. Accordingly, filter indexed "1" may be selected at step 548 in order to identify the first set of criteria based redundant filters from the three sets of sub-criteria based redundant filters 1202, 1204 and 1206. In an embodiment, at step 548 the redundant filters having second intersection score equal to or less than 1 may be analyzed based on a maximum or a minimum value of a sum of the sub-features extracted corresponding to each of the one or more sub-criteria at steps 514, 516 and 518.

Similarly, at step 534 three sets of sub-criteria based redundant filters may be determined based on the three sub-features extracted at steps 520, 522 and 524. Accordingly, the second set of criteria based redundant filters may be determined at step 554 based on each of the three set of sub-criteria based redundant filters determined at step 532 based on determination of a second intersection score at step 542 and/or based on the determination of a minimum or a maximum value at step 552. The minimum or a maximum value at step 552 may be determined based on the sum of the three sub-features extracted by the NNM at steps 520, 522 and 524 for the each of the one or more sub-criteria.

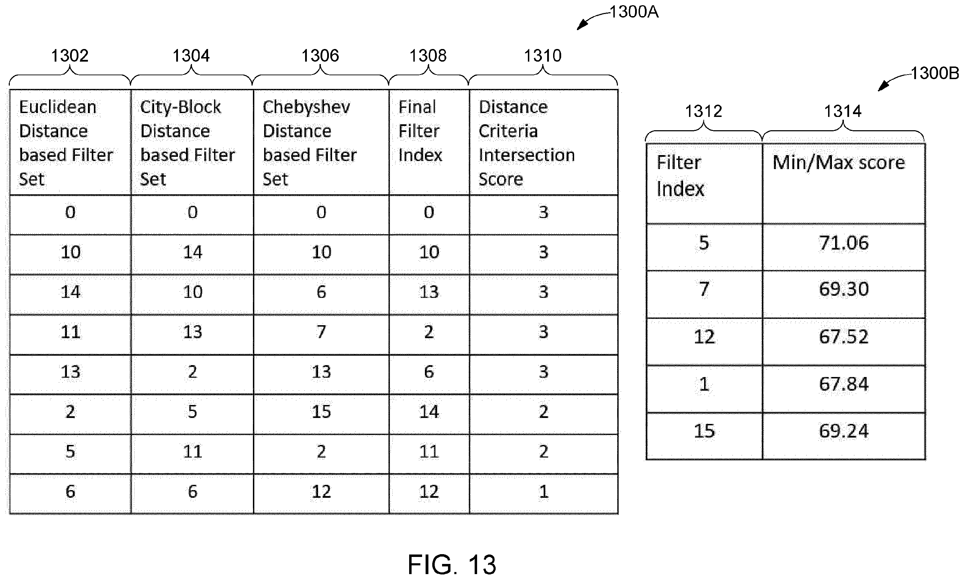

Referring now to **FIG. 13****,** two tables 1300A and 1300B provide exemplary distance based criteria intersection score and min/max score based on the set of sub-criteria based selected filters of one layer of VGG13 architecture, in accordance with some embodiments of the present disclosure.

In an exemplary embodiment, the predefined number of filters equal to eight are to be removed from each layer of the NMM. Accordingly, eight redundant filters may be identified in each layer based on the plurality of redundancy detection criteria. Table 1300A depicts a Euclidean distance based filter set 1302, a city-block distance based filter set 1304 and a Chebyshev distance based filter set 1306. The Euclidean distance based filter set 1302 may be determined by determining eight filters from the set of filters 602 sorted in an ascending value of the Euclidean distance sub-feature. In an embodiment, the sub-criteria based redundant filter set may be determined based on sorting of the filters based on ascending or descending value of the corresponding sub-features extracted. Table 1300A further provides the second intersection score as a distance criterion intersection score 1310. In an embodiment, the distance criterion intersection score 1310 identifies a frequency of occurrence of each of the final filters 1308 in the Euclidean distance based filter set 1302, the city-block distance based filter set 1304 and the Chebyshev distance based filter set 1306. Accordingly, it may be noted that filters indexed as "0", "10", "13", "2" and "6" have been selected in all the three sub-criteria based redundant filter sets 1302, 1304 and 1306. Also, filters indexed as "14" and "11" have been selected in only two of the three sub-criteria based redundant filter sets 1302, 1304 and 1306. Similarly, filter indexed "12" has been selected in only one of the three sub-criteria based redundant filter sets 1302, 1304 and 1306. Accordingly, filters indexed "0", "10", "13", "2", "6", "14" and "11" may be selected based on their higher second intersection score 1310. Further, since eight redundant filters are to be determined from the set of the filters 602, the min/max score analysis at step 552 may determine remaining one redundant filter based on a minimum or a maximum value of the sub-features extracted corresponding to the one or more sub-processing performed by the NNM for the each of the redundancy detection sub-criteria at steps 520, 522 and 524.

Accordingly, at step 552, a minimum or a maximum value of the total distance based score 908 may be determined for each of the set of filters 602 in order to determine one redundant filter in order to determine eight redundant filters for the second set of criteria based redundant filters at step 554. Table 1300B depicts list of filters 1312 having second intersection score 1310 of less than or equal to one and their corresponding min/max score 1314 as per the total distance based score 908. Accordingly, filter indexed "12" may be selected based on the min/max score analysis at step 552 in order to identify the second set of criteria based redundant filters from the three sets of sub-criteria based redundant filters 1302, 1304 and 1306. In an embodiment, at step 552 the min/max score analysis may determine redundant filters having second intersection score equal to or less than 1 based on a maximum or a minimum value of a sum of the sub-features extracted corresponding to each of the one or more sub-criteria at steps 520, 522 and 524.

Similarly, at step 536 two sets of sub-criteria based redundant filters may be determined based on the two sub-features extracted at steps 526 and 528. Accordingly, the third set of criteria based redundant filters may be determined at step 558 based on each of the two sets of sub-criteria based redundant filters determined at step 536 based on determination of a second intersection score at step 544 and/or based on the determination of a minimum or a maximum value at step 556. The determination of a minimum or a maximum value at step 556 is based on determination of a sum of the two sub-features extracted by the NNM at steps 526 and 528 for the each of the one or more sub-criteria at steps 526 and 528.

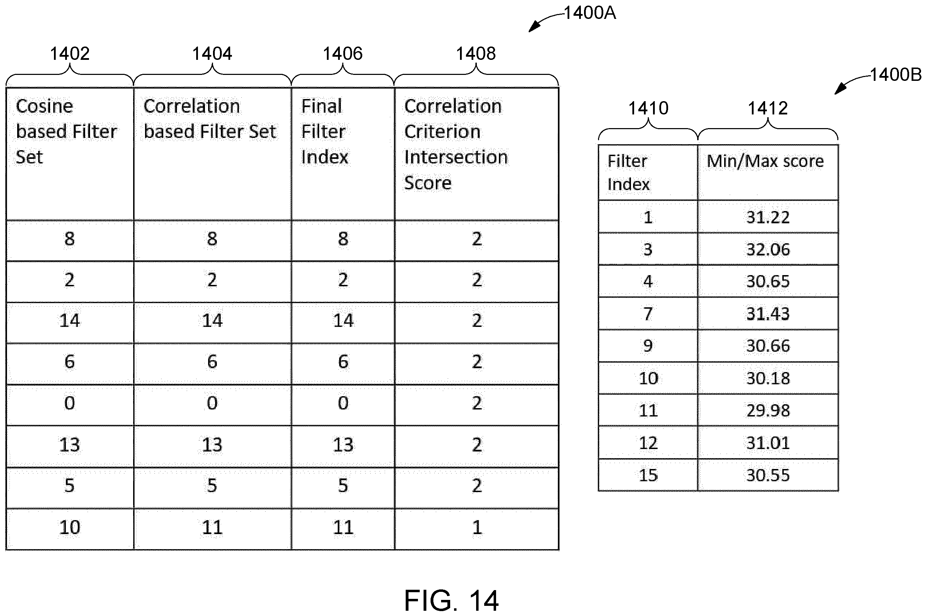

Referring now to **FIG. 14****,** two tables 1400A and 1400B provide exemplary correlation based criteria intersection score and min/max score based on the set of sub-criteria based selected filters of one layer of VGG13 architecture, in accordance with some embodiments of the present disclosure.

In an exemplary embodiment, the predefined number of filters equal to eight are to be removed from each layer of the NMM. Accordingly, eight redundant filters may be identified in each layer based on the correlation based redundancy detection criteria. Table 1400A depicts a Cosine based filter set 1402 and a correlation based filter set 1404. The Cosine based filter set 1402 may be determined by determining eight filters from the set of filters 602 sorted in an ascending value of the cosine distance value sub-feature 1002 of **FIG. 10****.** In an embodiment, the sub-criteria based redundant filter set may be determined based on sorting of the filters based on ascending or descending value of the corresponding sub-features extracted. In an embodiment, the cosine distance may be determined between two filters based on comparison of their weights. The cosine distance may be determined similarity between distribution of two filters. Further, the correlation based filter set 1404 may be determined by determining eight filters from the set of filters 602 sorted in an ascending value of the correlation distance value sub-feature 1004 of **FIG. 10****.** The correlation distance may be determined between two filters based on comparison of their weights. The correlation distance may be indicative of a coherence between distribution of two filters.

Table 1400A further provides the second intersection score as a correlation criterion intersection score 1408. In an embodiment, the correlation criterion intersection score 1408 identifies a frequency of occurrence of each of the final filters 1406 in the Cosine based filter set 1402 and the correlation based filter set 1404.

Accordingly, it may be noted that filters indexed as "8", "2", "14", "6", "0", "13" and "5" have been selected in all the two sets of sub-criteria based redundant filters 1402 and 1404. Similarly, filter indexed "11" has been selected in only one of the two sub-criteria based redundant filter sets 1402 and 1404. Accordingly, filters indexed "8", "2", "14", "6", "0", "13" and "5" may be selected based on their higher second intersection score 1410. Further, since eight redundant filters are to be determined from the set of the filters 602, the min/max score analysis at step 556 may determine remaining one redundant filter based on a minimum or a maximum value of the sub-features extracted corresponding to the one or more sub-processing performed by the NNM for the each of the redundancy detection sub-criteria at steps 526 and 528.

Accordingly, at step 556, the min/max score analysis may determine a minimum or a maximum value of the correlation based total score 1006 of **FIG. 10****,** for each of the set of filters 602 in order to determine one redundant filter in order to determine eight redundant filters for determining the third set of criteria based redundant filters. Table 1400B depicts list of filters 1410 having second intersection score 1408 of less than or equal to one and their corresponding min/max score 1412 as per the correlation based total score 1006. Accordingly, filter indexed "11" may be selected at step 556 in order to identify the third set of criteria based redundant filters at step 558 from the two sets of sub-criteria based redundant filters 1402 and 1404. In an embodiment, at step 556, the min/max score analysis may determine redundant filters having second intersection score equal to or less than 1 based on a maximum or a minimum value of a sum of the sub-features extracted corresponding to each of the one or more sub-criteria at steps 526 and 528.

Further, at step 538 one set of sub-criteria based redundant filters may be determined based on the mutual information sub-feature extracted at step 530. Accordingly, the fourth set of criteria based redundant filters may be determined at step 562 based on determination of a minimum or a maximum value of the mutual information sub-feature extracted by the NNM at step 530 by the min/max score analysis module 210 since there is only one sub-criteria. Accordingly, the step 546 may be skipped while determining the fourth set of criteria based redundant filters at step 562.

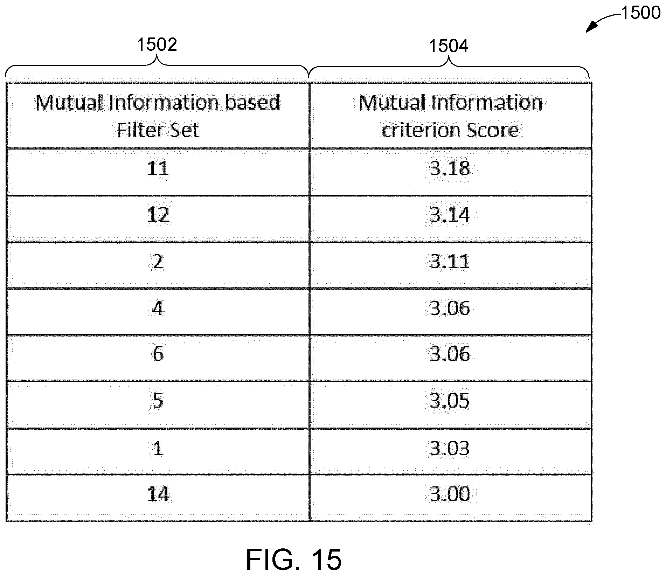

Referring now to **FIG. 15****,** table 1500 provides exemplary mutual information based min/max score of one layer of VGG13 architecture, in accordance with some embodiments of the present disclosure.

In an exemplary embodiment, the predefined number of filters equal to eight are to be removed from each layer of the NMM. Accordingly, eight redundant filters may be identified in each layer based on the mutual information based redundancy detection criteria at step 512. Table 1500 depicts a mutual information based filter set 1502 sorted in a descending order of the mutual information score 1504. In an embodiment, filters indexed "11", "12", "2", "4", "6", "5", "1" and "14" may be selected based on their decreasing mutual information score 1504 by the min/max score analysis at step 560. In an embodiment, redundant filters may be determined based on an ascending or descending order of the value of the sub-features extracted corresponding to the one or more sub-processing performed by the NNM for the redundancy detection sub-criteria at step 530.

At step 564, set of redundant filters may be determined from each of the first set of set of criteria based redundant filters, the second set of set of criteria based redundant filters, the third set of set of criteria based redundant filters and the fourth set of criteria based redundant filters determined at steps 550, 554, 558 and 562 respectively.

At step 566, the processor 104 may identify a set of redundant filters based on determination of a first intersection score of each of the filter from the set of filters based on its occurrence in each of the first set of set of criteria based redundant filters, the second set of set of criteria based redundant filters, the third set of set of criteria based redundant filters and the fourth set of set of criteria based redundant filters.

Further at step 568, the processor 104 may identify the set of redundant filters from the sets of criteria based redundant filters based on a normalized minimum or a normalized maximum value determined based on a sum of each of the features extracted based on the corresponding processing performed by the NNM for each of the plurality of predefined redundancy detection criteria. Further, at step 570 the redundant set of filters may be determined based on the steps 566 and/or 568. The compression of the NNM based on the redundant set of filters for each of the layer may include the processor 104 may remove the set of redundant filters from the set of filters.

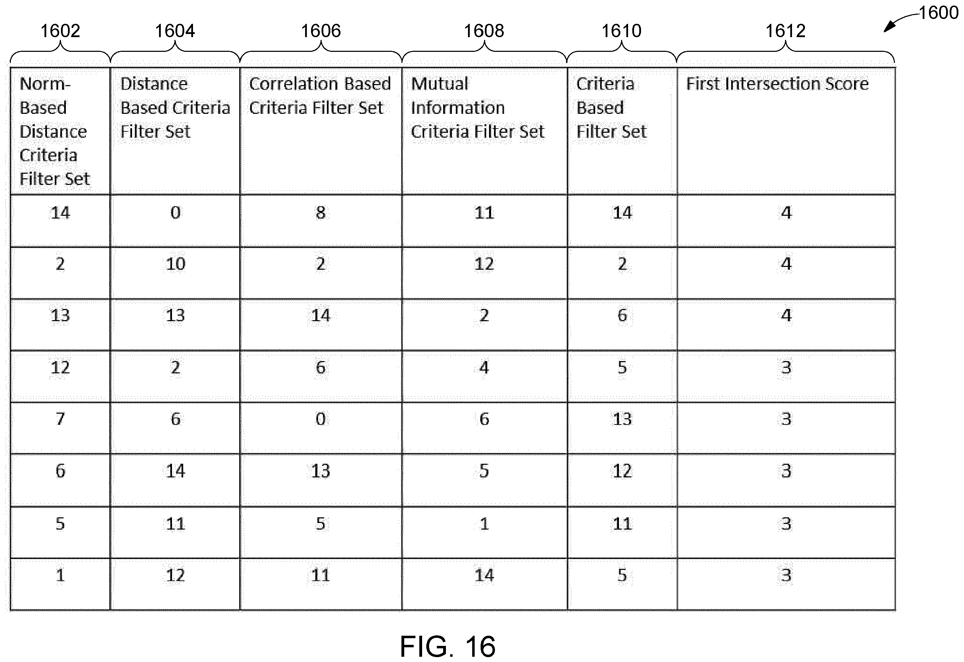

**FIG. 16** illustrates a table 1600 depicting exemplary determination of set of redundant filters from each of the sets of criteria based redundant filters, in accordance with some embodiment of the present disclosure.

Table 1600 provides the norm based distance criteria based redundant filters 1602 as the first set of criteria based redundant filters, the distance criteria based redundant filters 1604 as the second set of criteria based redundant filters, the correlation criteria based redundant filters 1606 as the third set of criteria based redundant filters and the mutual information based criteria based redundant filters 1608 as the fourth set of criteria based redundant filters. Each of the set of criteria based redundant filters may include a number of filters equal to the predefined number of filters to be removed from each layer of the NNM. In an exemplary embodiment, the predefined number of filters to be removed from each layer of the NNM may be defined as eight. Accordingly, each of sets of criteria based redundant filters 1602, 1604, 1606 and 1608 may include eight redundant filters. Table 1600 further depicts set of redundant filters 1610 determined from the sets of criteria based redundant filters 1602, 1604, 1606 and 1608 based on determination of a first intersection score 1612. The first intersection score 1612 may be determined based on determination of frequency of occurrence of a criteria based redundant filter 1610 in each of the sets of criteria based redundant filters 1602, 1604, 1606 and 1608 corresponding to each of the plurality of predefined redundancy detection criteria. Accordingly, it may be noted that the filters which may be selected as redundant filters based on most number of predefined redundancy detection criteria may be determined as redundant filters for the corresponding layer of the NNM. As shown in Table 1600, filters indexed "14", "2" and "6" have been selected in all the four sets of criteria based redundant filters 1602, 1604, 1606 and 1608. Further, filters indexed "5", "13", "12", "11" and "5" have been selected in three of the four sets of criteria based redundant filters 1602, 1604, 1606 and 1608. In an embodiment, set of redundant filters may also be determined based on determination of normalized maximum value determined based on the at least one type of feature extracted by the NNM for each of the plurality of predefined redundancy detection criteria.

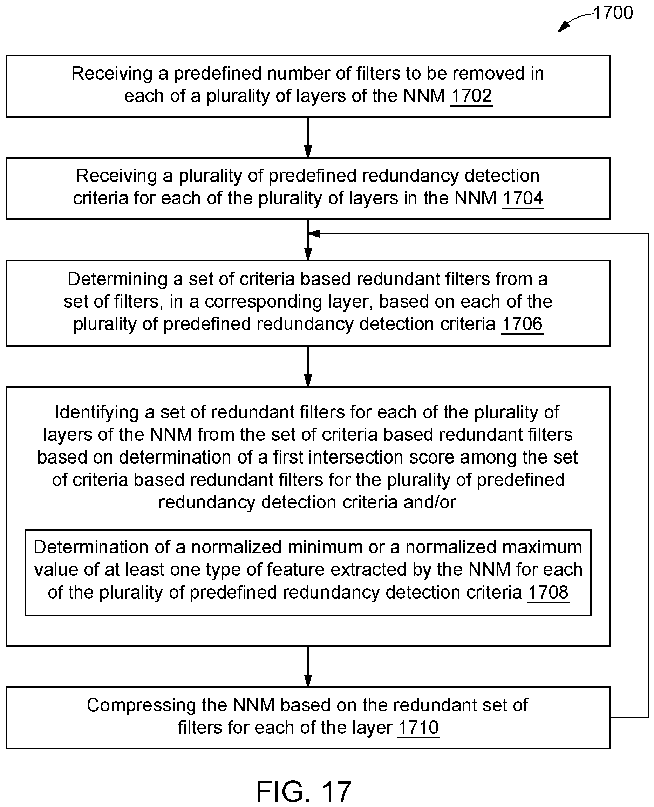

Referring now to **FIG. 17****,** a flowchart of a method of compressing neural network models, in accordance with some embodiments of the present disclosure. In an embodiment, method 1700 may include a plurality of steps that may be performed by the processor 104 to compress the neural network models.

At step 1702, the processor 104 may receive a predefined number of filters to be removed in each of a plurality of layers of the NNM. At step 1704, the processor 104 may receive a plurality of predefined redundancy detection criteria for each of the plurality of layers of the NNM. In an embodiment, each of predefined redundancy detection criteria corresponds to at least one type of feature extracted by the NNM.

Further at step 1706, the processor 104 may further determine a set of criteria based redundant filters from a set of filters, in a corresponding layer, based on each of the plurality of predefined redundancy detection criteria. The each of the plurality of predefined redundancy detection criteria comprises one or more sub-criteria. In an embodiment, each of the one or more sub-criteria of the corresponding predefined redundancy detection criteria corresponds to one or more sub-features extracted by the NNM, and in an embodiment determination of the set of criteria based redundant filters may include the processor 104 may determine a set of sub-criteria based redundant filters from the set of filters based on each of the one or more sub-criteria.

Further at step 1708, the processor 104 may further identify a set of criteria based redundant filters from the set of sub-criteria based redundant filters based on a first intersection score among the set of criteria based redundant filters for each of the one or more sub-criteria. The second intersection score may be proportional to a frequency of occurrence of a sub-criteria based redundant filter for the one or more sub-criteria. Further, the processor 104 may further identify the set of criteria based redundant filters from the set of sub-criteria based redundant filters based on a normalized minimum or a normalized maximum value determined based on the one or more features extracted by the NNM for the each of the plurality of predefined redundancy detection criteria. In an embodiment, the minimum or the maximum value may be determined based on a sum of an output of the at least one type of feature extracted by the NNM for the each of the plurality of predefined redundancy detection criteria.

Further at step 1710, the processor 104 may compress the NNM based on the redundant set of filters determined for each of the layers at step 1708. The compression of the NNM based on the redundant set of filters for each of the layer may include removing the set of redundant filters from the set of filters and fine tun the NNM based on knowledge distillation-based technique.

It is intended that the disclosure and examples be considered as exemplary only, with a true scope of disclosed embodiments being indicated by the following claims.

## Claims

1. A method of compressing a neural network model (NNM), the method comprising:
receiving, by a computing device, a predefined number of filters to be removed in each of a plurality of layers of the NNM;
for each of the plurality of layers of the NNM:
receiving, by the computing device, a plurality of predefined redundancy detection criteria,
wherein each of the plurality of predefined redundancy detection criteria corresponds to at least one type of feature extracted by the NNM;
determining, by the computing device, a set of criteria based redundant filters from a set of filters, in a corresponding layer, based on each of the plurality of predefined redundancy detection criteria;
identifying, by the computing device, a set of redundant filters from the set of criteria based redundant filters based on:
a first intersection score among the set of criteria based redundant filters for the plurality of predefined redundancy detection criteria, wherein the first intersection score is proportional to a frequency of occurrence of a criteria based redundant filter for the plurality of predefined redundancy detection criteria; and/or
a normalized minimum or a normalized maximum value determined based on the at least one type of feature extracted by the NNM for each of the plurality of predefined redundancy detection criteria;
wherein a number of the set of redundant filters is equal to the predefined number of filters to be removed; and
compressing, by the computing device, the NNM based on the redundant set of filters for each of the layer.

2. The method as claimed in claim 1, wherein each of the plurality of predefined redundancy detection criteria comprises one or more sub-criteria,
wherein each of the one or more sub-criteria of the corresponding predefined redundancy detection criteria corresponds to one or more sub-features extracted by the NNM,
wherein the one or more sub-features extracted relates to the corresponding type of feature, and
wherein determining the set of criteria based redundant filters comprises:
determining, by the computing device, a set of sub-criteria based redundant filters from the set of filters based on each of the one or more sub-criteria;
identifying, by the computing device, the set of criteria based redundant filters from the set of sub-criteria based redundant filters based on:
a second intersection score among the set of sub-criteria based redundant filters for each of the one or more sub-criteria,
wherein the second intersection score is proportional to a frequency of occurrence of a sub-criteria based redundant filter for the one or more sub-criteria; and/or
a minimum or a maximum value determined based on the one or more sub-features extracted by the NNM for the each of the one or more sub-criteria.

3. The method as claimed in claim 2, wherein the minimum or the maximum value is determined based on a sum of an output of each of the one or more sub-features extracted by the NNM for the each of the one or more sub-criteria.

4. The method as claimed in claim 1, wherein the normalized minimum or the normalized maximum value is determined based on a sum of an output of the at least one type of feature extracted by the NNM for each of the plurality of predefined redundancy detection criteria.

5. The method as claimed in claim 1, wherein the compression of the NNM based on the set of redundant filters for each of the layer comprises:
removing, by the computing device, the set of redundant filters from the set of filters; and
fine tuning, by the computing device, the NNM based on knowledge distillation based technique.

6. A system of compressing a neural network model (NNM), the system comprising:
a processor; and
a memory communicably coupled to the processor, wherein the memory stores processor-executable instructions, which, on execution by the processor, cause the processor to:
receive a predefined number of filters to be removed in each of a plurality of layers of the NNM;
for each of the plurality of layers of the NNM:
receive a plurality of predefined redundancy detection criteria,
wherein each of the plurality of predefined redundancy detection criteria corresponds to at least one type of feature extracted/determined by the NNM;
determine a set of criteria based redundant filters from a set of filters, in a corresponding layer, based on each of the plurality of predefined redundancy detection criteria;
identify a set of redundant filters from the set of criteria based redundant filters based on:
a first intersection score among the set of criteria based redundant filters for the plurality of predefined redundancy detection criteria, wherein the first intersection score is proportional to a frequency of occurrence of a criteria based redundant filter for the plurality of predefined redundancy detection criteria; and/or
a normalized minimum or a normalized maximum value determined based on the at least one type of feature extracted by the NNM for each of the plurality of predefined redundancy detection criteria,
wherein a number of the set of redundant filters is equal to the predefined number of filters to be removed; and
compress the NNM based on the set of redundant filters for each of the layer.

7. The system as claimed in claim 6, wherein each of the plurality of predefined redundancy detection criteria comprises one or more sub-criteria,
wherein each of the one or more sub-criteria of the corresponding predefined redundancy detection criteria corresponds to one or more sub-features extracted by the NNM,
wherein the one or more sub-features extracted relates to the corresponding type of feature, and
wherein determining the set of criteria based redundant filters comprises:
determine a set of sub-criteria based redundant filters from the set of filters based on each of the one or more sub-criteria;
identify the set of criteria based redundant filters from each of the set of sub-criteria based redundant filters based on:
a second intersection score among the set of sub-criteria based redundant filters for each of the one or more sub-criteria,
wherein the second intersection score is proportional to a frequency of occurrence of a sub-criteria based redundant filter for the one or more sub-criteria; and/or
a minimum or a maximum value determined based on the one or more sub-features extracted by the NNM for the each of the one or more sub-criteria.

8. The system as claimed in claim 7, wherein the minimum or the maximum value is determined based on a sum of an output of each of the one or more sub-features extracted by the NNM for the each of the one or more sub-criteria.

9. The system as claimed in claim 6, wherein the minimum or the normalized maximum value is determined based on a sum of an output of the at least one type of feature extracted by the NNM for each of the plurality of predefined redundancy detection criteria.

10. The system as claimed in claim 6, wherein the compression of the NNM based on the redundant set of filters for each of the layer comprises:
remove the set of redundant filters from the set of filters; and
fine tune the NNM based on knowledge distillation-based technique.
